# EUROPEAN PATENT SPECIFICATION

(11) **EP 0 823 097 B1**
(45) Date of publication and mention of the grant of the patent: **23.12.1998**
(21) Application number: 95923139.0
(22) Date of filing: 25.04.1995
(51) Int. Cl.: G06K 19/067, G06K 1/12

(54) **MEMORY CARD AND METHOD OF PRODUCING SAME**
SPEICHERKARTE UND VERFAHREN ZU IHRER HERSTELLUNG
CARTE MEMOIRE ET SON PROCEDE DE FABRICATION

(43) Date of publication of application: 11.02.1998
(73) Proprietor: Interprint Formularios Ltda., 09736-310 Sao Paulo, SP (BR)
(72) Inventor: ORTIZ, Fernando, Jr., 01533-000-Paraiso, SP (BR); MEDLEY, Peter, Boxford Suffolk CO10 5JR (GB)
(74) Representative: MacDougall, Donald Carmichael
(86) International application number: BR9500025
(87) International publication number: WO9634360

(56) References cited:
- DE-A- 2 163 664
- DE-A- 2 559 901
- DE-A- 4 002 794
- FR-A- 2 305 798

## Description

### Field of the Invention

This invention relates to memory cards of the type used as prepaid cards for dispensing goods and/or services, and to an improved method for producing such cards.

### Background of the Invention

Prepaid memory cards which enable their owner to perform purchases without the use of cash or tokens have become very popular. Such cards have been used to obtain a variety of goods and/or services, as for example, in vending machines for beverages or food, in prepayment of public transportation such as buses, trains or subways, or for use with public telephones or photocopy machines.

Typically, a memory card is purchased for a predetermined monetary value which is stored in the card and the monetary value is decremented as and when the card is used. Such memory cards are intended to be used until the prepaid monetary value of the card has been exhausted. Once the monetary amount on the card has been spent by the user, the card is either recycled or thrown away.

The memory cards presently available may be categorized into three general types: magnetically readable cards, microcircuit cards, and contactless cards. Magnetically readable cards have a magnetic stripe located on the outer surface where information, such as the remaining value of the card, is stored. They have the advantage of being relatively inexpensive, and have been used successfully, for example, as fare cards for transit systems. However, this type of card is of limited usefulness as a prepaid card for security reasons. The magnetically encoded information stored on the cards is capable of being acidentally erased or intentionally altered by unauthorized persons to increase the units originally contained on the memory card.

Microcircuit cards have a memory device, such as an integrated circuit or printed circuit, embedded into the card which, through suitable electrical contacts, can be connected to an external reader for determining the remaining value of the card. Examples of such microcircuit cards may be seen in U.S. Patent Nos. 4,737,620 to Mollet et al. and 4,719,140 to Hara et al.. Although much more resistant to tampering than magnetically readable cards, microcircuit cards have the disadvantage of being relatively expensive to produce. Therefore, they are not well suited to be used for denominations of relatively small monetary value.

Contactless cards do not have any contacts for physically making connection to an external reader device. Instead, contactless cards utilize means such as inductive and/or capacitive coupling for providing an external reader device with signals indicative of the monetary value of the card. Examples of contactless cards may be seen in U.S. Patent No. 5,272,596 to Honore et al., Brazilian Patent Specifications PI 9105585 and PI 9201380 and DE-2559901C2.

Regardless of the type of prepaid memory card, a limiting factor in determining practical uses or applications of the card is its associated cost. Typically, the use of prepaid memory cards is practical only where the total monetary value represented by the card exceeds the cost of the card itself. Thus, if the cost of the card can be reduced, this opens the possibility for issuing smaller denomination (i.e., a lower total monetary value) cards in the many existing applications where prepaid cards are presently used, and also expands the number of potential applications or uses for prepaid memory cards.

However, manufacturers are faced with a very significant challenge in reducing manufacturing costs without sacrificing the overall quality, reliability, and durability of the memory card. In addition, the nature of the materials and manufacturing techniques currently being used can result in stiff or brittle memory cards. Consequently, bending of the memory card during typical use may cause damage to or destruction of portions of the memory card. As a result, the memory card is prematurely decremented or rendered unusable.

### Summary of the Invention

With the foregoing in mind, it is an object of the present invention to produce a memory card at reduced overall cost.

It is a further object of the present invention to provide an improved, reduced cost memory card having good reliability and durability.

These and other objects, features, and advantages are obtained in accordance with the present invention as defined by claims 1 and 18. Conductive sites or cells are formed on a memory card by printing with conductive ink compositions. Memory cards in accordance with an embodiment of the present invention have a flexible substrate and at least one site provided on the card forming a closed loop conductive path in the card for electrical current inductively induced by an external reader device. Each site comprises a first ink composition in predetermined areas of the site so as to form a first portion of the closed loop conductive path and a second ink layer composition on the substrate forming a second portion of the closed loop conductive path which defines a fusible link which interrupts a closed loop conductive path. A protective layer preferably overlays and protects the ink layers.

Printed indicia is preferably provided on the front and/or back of the memory card to enhance the attractiveness of the memory card and provide instructions for its use.

The substrate may be made from a flexible thermoplastic polymer such as acrylonitrile-butadienestyrene, polyethylene terephthalate or polyvinylchloride. An alternative material for making the substrate is a silk-screenable nonporous paper. The preferred substrate provides a memory card with excellent durability and reliability. Moreover, the card has good flexibility, enabling the memory card to be bent almost 180° in each direction during use and/or storage by the owner, without damaging or destroying the memory. As a result, the memory card can withstand extensive abuse and still perform its intended function until its monetary value has been exhausted.

In one embodiment of the invention, the first and second ink compositions of the memory card are designed to provide for storing a predetermined number of "units" of some preassigned value, and for incrementally and permanently decrementing the number of units as the memory card is used and the units of value are "spent." Preferably, the memory card has a plurality of spaced apart sites or cells which are adapted to be read by an external reader device. Each site on the memory card is capable of being irreversibly converted from a first readable state to a second readable state. This ability to irreversibly convert each site enables the memory card to be decremented as and when it is used in a secure, tamperproof manner.

The above described memory card is preferably manufactured by an efficient low cost method which enables the memory card to be used in a wide variety of applications while maintaining its high quality. More particularly, the preferred method involves printing a first magnetic conductive ink composition in predetermined areas on a surface of a flexible substrate so as to form a first portion of a closed loop conductive path. The first magnetic conductive ink composition is dried to eliminate the solvent contained therein and ensure that it permanently adheres to the substrate. Then a second electrically conductive ink composition is printed in conductive contact with the first electrically conductive ink composition. The second conductive ink composition forms a thermally fusible link to complete the closed loop conductive path, which in cooperation with the first portion of the closed loop conductive path, forms a site on the card readable by an external reader device. Once the second ink has sufficiently dried, a protective sealant layer is applied thereto to overlay and protect the site.

The first magnetic conductive ink composition comprises a polymer binder which has a conductive magnetic filler therein. A suitable conductive magnetic filler is silver-nickel alloy flakes.

The second conductive ink composition also comprises a polymer binder containing an electrically conductive filler. The filler contains a lower melting electrically conductive metallic component which gives the ink composition a relatively lower thermal stability or melting point than the first electrically conductive ink composition. As a result, the second electrically conductive ink composition, upon heating to an elevated temperature, will soften and retract. Therefore the second electrically conductive ink is used to form a fusible link of the site, which enables the site to be irreversibly converted from the first readable state to the second readable state by an external reader device as the memory card is used. The conductive filler in the second ink composition may, for example, include nickel-silver alloy flakes or particles as well as flakes or particles of a lower melting metal composition, such as a solder formed of a tin-lead alloy or other alloys or eutectic compositions.

### Brief Description of the Drawings

FIG. 1 is a front perspective view of a memory card in accordance with the present invention;
FIG. 2A is a cross-sectional view of the card taken along line 2-2 of FIG. 1, showing a flexible thermoplastic polymer substrate;
FIG. 2B is a cross-sectional view of the card taken along line 2-2 of FIG. 1, showing a nonporous paper substrate;
FIG. 3 is a front perspective view of the card during its manufacture, showing the first conductive ink printed on the surface of the substrate in a predetermined pattern;
FIG. 4 is a view similar to FIG. 3 showing the second ink printed on the first conductive ink in a predetermined pattern;
FIG. 5 is a top plan view of one cell on the memory card showing the cell in its first readable state; and
FIG. 6 is a top plan view of the cell shown in Fig. 5, in its second unreadable state after it has been decremented by an external reader device.

### Detailed Description of the Preferred Embodiments

The present invention now will be described more fully hereinafter with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. Like numbers refer to like elements throughout.

According to the illustrated embodiment, a flexible contactless memory card **10** is provided for use with a card reader device similar to that disclosed in Brazilian Patent Specification No. PI 9201380. The memory card has a plurality of readable sites, as explained more fully below, and the card reader device is designed to sense the status or state the readable sites and to determine therefrom the monetary value remaining on the card.

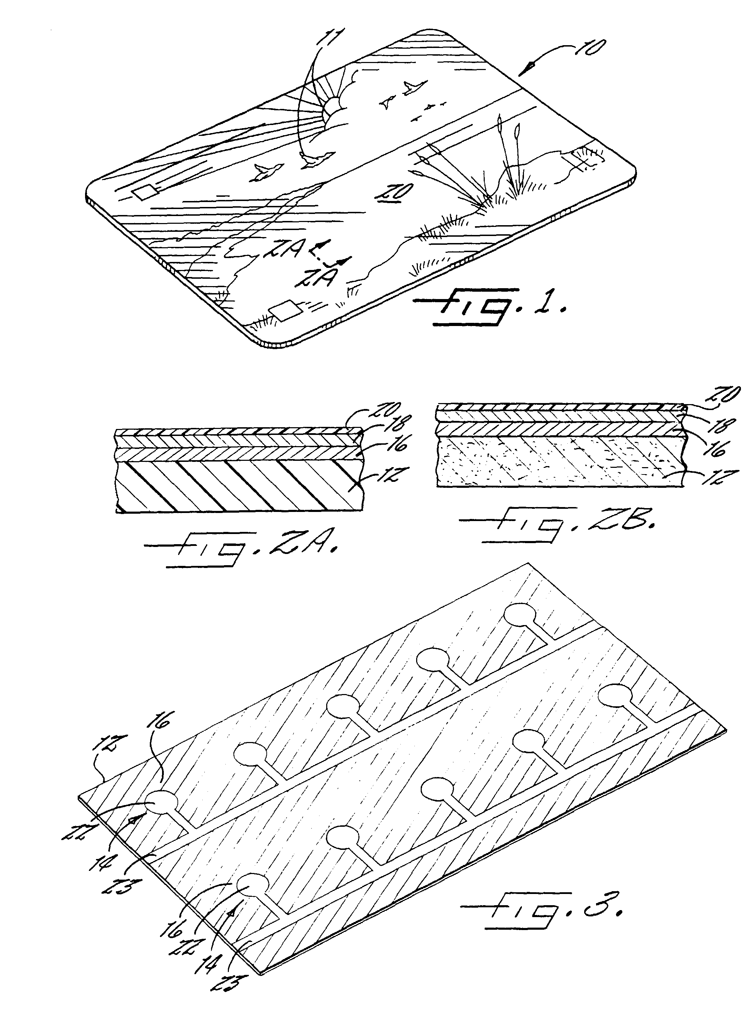

As shown in Fig. 1 of the drawings, the memory card **10** has a generally rectangular configuration with rounded corners. The memory card **10** has an overall dimension of approximately 8.55 cm (3.36 inches) by 5.39 cm (2.12 inches) and a thickness of approximately 12 to 14 mils. The front and/or back surface of the memory card **10** may bear printed indicia in the form of text and/or designs as indicated at **11**.

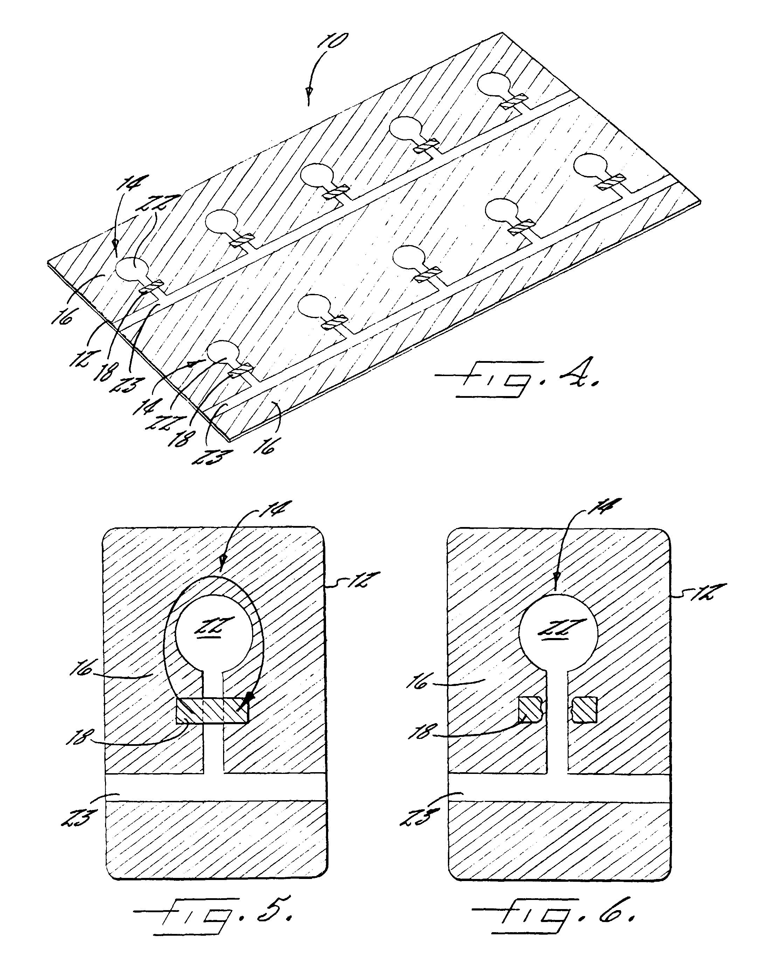

As shown in Figs. 3 and 4, the memory card 10 has a flexible substrate **12** and at least one, preferably a plurality, of readable sites or cells generally indicated as **14.** Each readable site **14** forms a closed loop conductive path (represented in Fig. 5 by the arrow) in the card surface **12** for electrical current induced by an external pulse generator or reader device. The site **14** is formed from a first ink composition having good magnetic properties and electrical conductivity, applied on the substrate in a predetermined area, generally indicated as **16**, and a second ink composition applied to the substrate and overlying a portion of the predetermined area **16** to form a fusible link, generally indicated as **18**. The second ink composition has good electrical conductivity properties. A protective layer **20** (Figs. 1 and 2) overlies and protects the first and second ink compositions, and provides an abrasion resistant front surface for the card **10**. The protective layer **20** may also bear either offset or litho printed indicia **11**, shown in Fig. 1, to enhance the attractiveness of the memory card **10** and provide necessary instructions for use of the card.

In one embodiment of the invention, as shown in Fig. 2A, the substrate **12** is made from a durable, flexible thermoplastic polymer such as acrylonitrile-butadiene-styrene, polyethylene terephthalate or polyvinylchloride. Alternatively, as shown in Fig. 2B, the substrate **12** may be formed of paper of suitable weight and surface finish. Preferably, the paper substrate has a calendered, relatively nonporous surface finish suitable for printing by silk-screening. The substrate **12** of this embodiment preferably may have a thickness of approximately 0.3 mm +/- 0.02mm.

The first and second ink compositions each comprise a polymer binder having an electrically conductive filler dispersed therein and a suitable diluent or solvent to maintain the ink composition at the appropriate viscosity for printing and to provide for rapid drying after printing. Preferably, the polymer binder is a thermoplastic resin material, such as an acrylic resin. Any of a number of filler materials which are known in the art for use in conductive ink compositions could be employed in the ink composition.

The filler material used in the first conductive ink composition has both magnetic properties and good electrical conductivity. The ink composition preferably is a relatively high melting material so that after the ink composition has dried, the predetermined area **16** formed by the ink composition has a relatively high thermal stability. Nickel-silver flake pigments have been suitably employed for this purpose as the magnetic conductive filler material. A lower-melting filler material is used in the second ink composition so that the fusible link **18** formed from the ink composition has a lower thermal stability and will soften and retract when heated to thereby interrupt the conductive path formed by the fusible link **18**. A mixture of silver flake and a solder powder of a low melting metal such as a tin/lead eutectic composition has been suitably employed for this purpose.

By way of illustration, the first ink composition may employ nickel-silver flake of approximately 81% pure silver dispersed in an acrylic thermoplastic resin binder. Butylglycolacetate may be used as a diluent or solvent as necessary to give the ink composition a suitable consistency for printing. For silk screen printing, the ink composition preferably has a Brooksfield viscosity of about 15000 mPaS. After printing, the ink composition is oven dried. The predetermined area **16** of conductive ink formed by the first ink composition preferably has a sheet resistance of 0.010 ohms/sq with 25 microns of thickness.

By way of illustration, the second electrically conductive ink composition may suitably have a solids content of approximately 77%, of which silver flake is approximately 60%, tin is approximately 10% and lead is approximately 7%. The remaining percentage of the second ink is made up of a thermoplastic resin binder, such as an acrylic resin, and a butylglycolacetate diluent or solvent. For application by screen printing, the second ink composition preferably has a lower viscosity than that of the first ink composition and is applied over a smaller area of the surface of the substrate and at less thickness than the first ink composition. A suitable viscosity for the second ink composition is about 22000 mPaS Brooksfield viscosity. The fusible link **18** formed by the second ink composition preferably has a sheet resistance of 0.060 ohms per square of 25 microns of thickness. The lower-melting tin and lead components gives the fusible link **18** a lower melting point or thermal stability than the predetermined area **16** formed of the first electrically conductive ink composition. When the fusible link **18** is heated, for example by passage of an inductive current of sufficient magnitude, the link **18** will soften and melt. Capillary forces and/or the wetting characteristics of the second ink composition are such that fusible link **18** retracts or pulls apart upon melting so as to interrupt the closed loop conductive path formed by fusible link **18,** thereby irreversibly converting the cell **14** from a first readable state, shown in Fig. 5, to a second readable state shown in Fig. 6.

Figs. 3 through 5 illustrate one suitable method for manufacturing the card **10**. As shown in Fig. 3, the first ink composition is applied on the surface of the substrate **12** in predetermined areas **16** by means of silk-screening. The silk screen equipment used to manufacture the card **10** has a metal mesh screen of at least #120. The rubber squeegee or blade (not shown) used therewith preferably has at least 65 shore D to ensure the best transfer of the low solvent first ink composition and the second ink composition and to assist in obtaining a uniform layer of each of the first and second inks. It is to be understood that the size of the mesh and the blade are dependent upon and may vary depending on the relative viscosity of the first and second inks being used and other factors.

As shown, the predetermined areas **16** define an open central area **22** having a generally keyhole shape and opposing spaced apart leg portions, which extend along opposed sides of the keyhole shaped open central area. This open central area **22** is not electrically conductive. An elongate open area **23** extends between each cell **14** to thereby avoid material contact therebetween. The predetermined areas **16** thus form a first portion of the closed loop conductive path represented by the arrow in Fig. 5.

As seen in the drawings, a plurality of individual sites **14** is provided arranged in columns and rows to create a magnetic interaction between the card and correspondingly located reader sites on the external reading device. The number of sites and their organization on the card are predetermined based on the intended use of the card.

After the first electrically conductive ink composition has been applied to the substrate **12** in the desired pattern, the first ink is dried. One acceptable method of drying the first electrically conductive ink composition set forth above is by being exposing it to an oven (not shown) for 15 minutes at a temperature of between 90° C and 120° C. This heating causes the solvent existing in the first conductive ink composition to be evaporated. Once dried, the resultant predetermined area **16** is magnetic and has a sheet resistance of less than 0.01 ohms per square. It is also possible to cure the first conductive ink composition by allowing it to air dry over a prolonged period of time and still achieve the same desired results.

The process for applying the second conductive ink composition is shown best in Figs. 4 and 5 of the drawings. The second ink composition is printed onto the formation in the predetermined areas **16** by means of silk-screening. The second ink composition forms the fusible link **18**, which conductively overlies a portion of the first ink composition such that the fusible link spans transversely across a narrow elongated slot portion of the open central area **24**. Once applied, the second electrically conductive ink composition may be dried in a manner similar to that described above with reference to the first ink composition.

The fusible link **18** forms the remaining portion of the closed loop conductive path. As shown by the arrow in Fig. 5, the current induced by the external reader device is directed around the generally circular closed loop magnetic conductive path of the site **14**. When the site **14** is subjected to an electromagnetic field pulse, a current is generated causing the temperature at the site to increase. As the site 14 is heated to a sufficiently high elevated temperature, the fusible link **18** softens and retracts thereby interrupting the closed loop conductive path of the induced current. As a result of this interruption in the closed loop conductive path, the site **14** is irreversibly converted from the first readable state shown in Fig. 5 to the second readable state shown in Fig. 6.

Although only one site **14** on the surface of the card has been described, it will be understood that the memory card **10** will have a plurality of such sites, typically arranged in columns and rows. A protective layer **20** is then applied so as to overlie and seal the plurality of sites **14**. The protective layer **20** may, or example, comprise a preformed film layer laminated to the substrate **12** by a suitable adhesive.
Alternatively, the protective layer may comprise a coating layer of a suitable hardenaule composition, such as an epoxy composition, overlying the printed surface of the substrate. Printed indicia may then be added to the front and/or the back of the memory card **10** by offset or litho printing to enhance the attractiveness of the card and/or provide instructions for its use.

The memory card **10**, manufactured by the above-described method, is inserted into an external inductive reader device, such as that described in Brazilian Patent Specification No. PI 9210380, which locates the respective sites **14** in the card. As illustrated in Figs. 4 and 5, the sites are initially in a first, non-decremented state in which the fusible link **18** is intact. In order to decrement the card by one unit of value, the fusible link **18** can be fused and broken. The external reader device accomplishes this by inducing a current into the site **14**, which concentrates at the fusible link **18**, causing the link to soften and retract, thereby interrupting the closed loop conductive path. The site **14**, as shown in Fig. 6, is thus irreversibly converted to the second readable state.

The external reader device can detect the difference between a site **14** in the first readable state and one in the second readable state. In this manner, the reader device can determine the number of sites in the first readable state, to thus ascertain the number of monetary units of value remaining on the card. When a monetary unit of value is "spent", the reader device causes a site to be converted to the second readable state by fusing i.e., softening and retracting the fusible link **18**. The memory card 10 is usable until all its sites have been decremented in the above-described fashion.

Many modifications and other embodiments of the invention will come to mind in one skilled in the art to which this invention pertains having the benefit of the teachings presented in the foregoing descriptions and the associated drawings. Therefore, it is to be understood that the invention is not to be limited to the specific embodiments disclosed. Although specific terms are employed, they are used in a generic and descriptive sense only and not for purposes of limitation, the scope of the invention being defined by the appended claims.

## Claims

1. A memory card (10) comprising a substrate (12) and at least one site (14) provided on said substrate forming a closed loop conductive path in said card for electrical current inductively induced by an external reader device, characterized in that said site comprises:
a first conductive ink composition (16) in predetermined areas of said site forming a first portion of said closed loop conductive path, and
a second conductive ink composition (18) forming a second portion of said closed loop conductive path, said second ink composition having a lower thermal stability than said first ink composition so as to define a fusible link which interrupts said closed loop conductive path when fused.

2. A memory card as set forth in Claim 1 wherein said second conductive ink composition comprises a heat retractive thermoplastic composition which, upon heating to an elevated temperature, will soften and retract to interrupt said closed loop conductive path.

3. A memory card as set forth in Claim 2 wherein said second conductive ink composition comprises a polymer binder having an electrically conductive filler therein.

4. A memory card as set forth in Claim 3 wherein said electrically conductive filler comprises silver, tin, and lead.

5. A memory card as set forth in Claim 3 wherein said first conductive ink composition also comprises a polymer binder having a conductive filler therein, and as a higher thermal stability than said second electrically conductive ink composition.

6. A memory card as set forth in Claim 5 wherein said conductive filler in said first ink composition comprises a nickel-silver alloy.

7. A memory card as set forth in any one of claims 1 to 6 wherein said substrate comprises a flexible thermoplastic polymer sheet.

8. A memory card as set forth in any one of claims 1 to 6 wherein said substrate comprises a nonporous paper.

9. A memory card as set forth in any preceding claim additionally including a film laminated to said substrate to form a protective layer (20) overlying and protecting said site.

10. A memory card as set forth in any preceding claim additionally including an epoxy layer on said substrate forming a protective layer (20) overlying and protecting said site.

11. A memory card as set forth in any preceding claim wherein said substrate and said first and second electrically conductive ink compositions have a combined thickness of between 305 µm (12 mils) and 356 µm (14 mils).

12. A memory card as set forth in any preceding claim wherein said second conductive ink composition overlaps at least a portion of said first conductive ink composition.

13. A memory card as set forth in any one of claims 1 to 11 wherein said first conductive ink composition defines on the surface of said substrate a formation with an open central area (22) and opposing spaced apart leg portions, said formation forming a portion of said closed loop conductive path; and wherein said second conductive ink composition is in conductive contact with said first magnetic conductive ink composition and spans said leg portions of said formation to form the remaining portion of said closed loop conductive path, said second electrically conductive ink composition defining a fusible link which can be fused and broken by current from an external reader device so as to thereby convert said site from a first readable state to a second readable state.

14. A memory card as set forth in Claim 13 wherein said formation defines a generally keyhole shaped open nonconductive central area (22).

15. A memory card as set forth in Claim 13 wherein said second conductive ink composition which defines said fusible link overlies a portion of said first electrically conductive ink composition and spans said nonconductive area.

16. A memory card as set forth in Claim 15 wherein said second conductive ink composition which defines said fusible link is in the form of a band of said conductive ink composition located overlying and in conductive contact with said leg portions of said formation and spanning across the space between said leg portions.

17. A memory card as set forth in Claim 13 wherein said second electrically conductive ink composition comprises a heat retractive themoplastic composition which, upon heating to an elevated temperature, will soften and retract to interrupt said closed loop conductive path.

18. A method of forming the memory card of claim 1 comprising the following steps :
printing a first conductive ink composition on a predetermined area of a substrate and forming a portion of a closed loop conductive path; and
printing a second conductive ink composition on the substrate in conductive contact with said first electrically conductive ink composition, and forming a thermally fusible link to complete said closed loop conductive path and thereby form a site on the card readable by an external reader device, said second ink composition having a lower thermal stability than said first ink composition, so that the fusible link interrupts said closed loop conductive path when fused.

19. A method of forming memory card according to claim 18, wherein said step of printing a first magnetic conductive ink composition onto a substrate defines a formation with an open central area and opposing spaced apart leg portions, said formation forming a portion of a closed loop conductive path; and said step of printing a second electrically conductive ink composition in conductive contact with said first electrically conductive ink composition forms a thermally fusible link spanning said leg portions of said formation to complete said closed loop conductive path and thereby form a site on the card readable by an external reader device, the fusible link being capable of being fused and broken so as to thereby convert said site from a first readable state to a second readable state; and further comprising applying a protective layer to said substrate overlying and protecting the first and second electrically conductive ink compositions.

## Patentansprüche

1. Speicherkarte (10) mit einem Substrat (12) und wenigstens einer auf dem Substrat vorgesehenen Stelle (14), die eine geschlossene schleifenförmige Leiterbahn in der Karte ausbildet, damit elektrischer Strom von einem externen Lesegerät induktiv induziert wird, dadurch gekennzeichnet, daß die Stelle aufweist:
eine erste leitende Tintenzusammensetzung (16), die in vorgegebenen Bereichen der Stelle vorgesehen ist und einen ersten Abschnitt der geschlossenen schleifenförmigen Leiterbahn bildet, und
eine zweite leitende Tintenzusammensetzung (18), die einen zweiten Abschnitt der geschlossenen schleifenförmigen Leiterbahn bildet und eine niedrigere Wärmebeständigkeit als die erste Tintenzusammensetzung aufweist, um eine Durchschmelzverbindung auszubilden, die im geschmolzenen Zustand die geschlossene schleifenförmige Leiterbahn unterbricht.

2. Speicherkarte nach Anspruch 1, bei der die zweite leitende Tintenzusammensetzung eine sich bei Wärme verkürzende thermoplastische Zusammensetzung aufweist, die bei einer Erwärmung auf eine erhöhte Temperatur erweichen und sich verkürzen wird, um die geschlossene schleifenförmige Leiterbahn zu unterbrechen.

3. Speicherkarte nach Anspruch 2, bei der die zweite leitende Tintenzusammensetzung einen Polymerbinder aufweist, in dem ein elektrisch leitender Füllstoff vorhanden ist.

4. Speicherkarte nach Anspruch 3, bei der der elektrisch leitende Füllstoff Silber, Zinn und Blei aufweist.

5. Speicherkarte nach Anspruch 3, bei der die erste leitende Tintenzusammensetzung auch einen Polymerbinder enthält, in dem ein leitender Füllstoff vorhanden ist, und eine höhere Wärmebeständigkeit als die zweite elektrisch leitende Tintenzusammensetzung aufweist.

6. Speicherkarte nach Anspruch 5, bei der der leitende Füllstoff in der ersten Tintenzusammensetzung eine Nikkel-Silber-Legierung aufweist.

7. Speicherkarte nach einem der Ansprüche 1 bis 6, bei der das Substrat eine flexible, thermoplastische Polymerfolie aufweist.

8. Speicherkarte nach einem der Ansprüche 1 bis 6, bei der das Substrat ein nichtporöses Papier aufweist.

9. Speicherkarte nach einem der vorhergehenden Ansprüche, die zusätzlich einen schichtförmig auf das Substrat aufgebrachten Film aufweist, um eine Schutzschicht (20) auszubilden, die die Stelle überdeckt und schützt.

10. Speicherkarte nach einem der vorhergenden Ansprüche, die zusätzlich eine Epoxidschicht auf dem Substrat aufweist, die eine Schutzschicht (20) bildet, die die Stelle überdeckt und schützt.

11. Speicherkarte nach einem der vorhergenden Ansprüche, bei der das Substrat und die erste und die zweite elektrisch leitende Tintenzusammensetzung eine kombinierte Dicke zwischen 305 µm (12 mils) und 356 µm (14 mils) aufweisen.

12. Speicherkarte nach einem der vorhergenden Ansprüche, bei der die zweite leitende Tintenzusammensetzung wenigstens einen Teil der ersten leitenden Tintenzusammensetzung überlappt.

13. Speicherkarte nach einem der Ansprüche 1 bis 11, bei der die erste leitende Tintenzusammensetzung auf der Oberfläche des Substrats ein Gebilde mit einem offenen mittigen Bereich (22) und mit mit Abstand einandergegenüberliegenden Schenkelabschnitten definiert, wobei das Gebilde einen Abschnitt der geschlossenen schleifenförmigen Leiterbahn ausbildet, und bei der die zweite leitende Tintenzusammensetzung in leitendem Kontakt mit der ersten magnetischen leitenden Tintenzusammensetzung ist und die Schenkelabschnitte des Gebildes überbrückt, um den restlichen Abschnitt der geschlossenen schleifenförmigen Leiterbahn auszubilden, wobei die zweite elektrisch leitende Tintenzusammensetzung eine Durchschmelzverbindung bildet, die von Strom von einem externen Lesegerät geschmolzen und gebrochen werden kann, um so die Stelle von einem ersten lesbaren Zustand in einen zweiten lesbaren Zustand umzuwandeln.

14. Speicherkarte nach Anspruch 13, bei der das Gebilde einen allgemein schlüssellochförmigen offenen nichtleitenden mittigen Bereich (22) festlegt.

15. Speicherkarte nach Anspruch 13, bei der die zweite leitende Tintenzusammensetzung, die die Durchschmelzverbindung bildet, einen Teil der ersten elektrisch leitenden Tintenzusammensetzung überdeckt und den nichtleitenden Bereich überbrückt.

16. Speicherkarte nach Anspruch 15, bei der die zweite leitende Tintenzusammensetzung, die die Durchschmelzverbindung bildet, in Form eines Bandes aus der leitenden Tintenzusammensetzung gebildet ist, das so angeordnet ist, daß es die Schenkelabschnitte des Gebildes überdeckt und mit diesen in leitendem Kontakt ist und den Abstand zwischen den Schenkelabschnitten überbrückt.

17. Speicherkarte nach Anspruch 13, bei der die zweite elektrisch leitende Tintenzusammensetzung eine sich bei Wärme verkürzende thermoplastische Zusammensetzung aufweist, die bei Erwärmung auf eine erhöhte Temperatur erweichen und sich verkürzen wird, um die geschlossene schleifenförmige Leiterbahn zu unterbrechen.

18. Verfahren zum Herstellen der Speicherkarte nach Anspruch 1, mit den folgenden Schritten:
Drucken einer ersten leitenden Tintenzusammensetzung auf einen vorgegebenen Bereich eines Substrates und Bilden eines Abschnitts einer geschlossenen schleifenförmigen Leiterbahn; und
Drucken einer zweiten leitenden Tintenzusammensetzung auf das Substrat in leitendem Kontakt mit der ersten elektrisch leitenden Tintenzusammensetzung und Bilden einer thermisch durchschmelzbaren Verbindung, um die geschlossene schleifenförmige Leiterbahn zu vervollständigen und dadurch eine Stelle auf der Karte auszubilden, die von einem externen Lesegerät lesbar ist, wobei die zweite Tintenzusammensetzung eine niedrigere Wärmebeständigkeit als die erste Tintenzusammensetzung aufweist, so daß die Durchschmelzverbindung im geschmolzenen Zustand die geschlossene schleifenförmige Leiterbahn unterbricht.

19. Verfahren zum Herstellen einer Speicherkarte, nach Anspruch 18, bei dem der Schritt des Druckens einer ersten magnetischen leitenden Tintenzusammensetzung auf ein Substrat ein Gebilde mit einem offenen mittigen Bereich und mit mit Abstand einander gegenüberliegenden Schenkelabschnitten festlegt, wobei das Gebilde einen Abschnitt einer geschlossenen schleifenförmigen Leiterbahn ausbildet, und bei dem der Schritt des Druckens einer zweiten elektrisch leitenden Tintenzusammensetzung in leitendem Kontakt mit der ersten elektrisch leitenden Tintenzusammensetzung eine thermisch durchschmelzbare Verbindung ausbildet, die die Schenkelabschnitte des Gebildes überbrückt, um die geschlossene schleifenförmige Leiterbahn zu vervollständiqen und dadurch eine Stelle auf der Karte zu bilden, die von einem externen Lesegerät lesbar ist, wobei die Durchschmelzverbindung geschmolzen und gebrochen werden kann, um so die Stelle von einem ersten lesbaren Zustand in einen zweiten lesbaren Zustand umzuwandeln, und wobei ferner das Aufbringen einer Schutzschicht auf das Substrat vorgesehen ist, die die erste und die zweite elektrisch leitende Tintenzusammensetzung überdeckt und schützt.

## Revendications

1. Carte de mémoire (10) comprenant un substrat (12) et au moins un site (14) prévu sur ledit substrat et formant une voie conductrice en boucle fermée dans ladite carte pour un courant électrique induit inductivement par un dispositif extérieur de lecture, caractérisée en ce que le site comprend :
une première composition d'encre conductrice (16) dans des zones prédéterminées dudit site, formant une première partie de ladite voie conductrice en boucle fermée, et
une seconde composition d'encre conductrice (18) formant une seconde partie de ladite voie conductrice en boucle fermée, ladite seconde composition d'encre possédant une stabilité thermique inférieure à celle de ladite première composition d'encre de manière à définir un lien fusible qui interrompt ladite voie conductrice en boucle fermée, lorsqu'il est fondu.

2. Carte de mémoire selon la revendication 1, dans laquelle ladite seconde composition d'encre conductrice comprend une composition thermoplastique thermorétractable et qui, lors d'un chauffage à une température élevée, se ramollit et se rétracte de manière à interrompre ladite voie conductrice en boucle fermée.

3. Carte de mémoire selon la revendication 2, dans laquelle ladite seconde composition d'encre conductrice comprend un liant polymère contenant une charge électriquement conductrice.

4. Carte de mémoire selon la revendication 1, dans laquelle ladite charge électriquement conductrice comprend de l'argent, de l'étain et du plomb.

5. Carte de mémoire selon la revendication 3, dans laquelle ladite première composition d'encre conductrice comprend également un liant polymère contenant une charge conductrice et possède une stabilité thermique supérieure à celle de ladite seconde composition d'encre électriquement conductrice.

6. Carte de mémoire selon la revendication 5, dans laquelle ladite charge conductrice dans ladite première composition d'encre comprend un alliage nickel-argent.

7. Carte de mémoire selon l'une quelconque des revendications 1 à 6, dans laquelle ledit substrat comprend une feuille polymère thermoplastique souple.

8. Carte de mémoire selon l'une quelconque des revendications 1 à 6, dans laquelle ledit substrat comprend un papier non poreux.

9. Carte de mémoire selon l'une quelconque des revendications précédentes, comprenant en supplément un film appliqué sur ledit substrat de manière à former une couche conductrice (20) recouvrant et protégeant ledit site.

10. Carte de mémoire selon l'une quelconque des revendications précédentes, comprenant en supplément une couche époxy située sur ledit substrat et formant une couche conductrice (20) recouvrant et protégeant ledit site.

11. Carte de mémoire selon l'une quelconque des revendications précédentes, dans laquelle ledit substrat et lesdites première et seconde compositions d'encres électriquement conductrices possèdent des épaisseurs combinées comprises entre 305 µm (12 millièmes de pouce) et 356 µm (14 millièmes de pouce).

12. Carte de mémoire selon l'une des revendications précédentes, dans laquelle ladite seconde composition d'encre conductrice recouvre au moins une partie de ladite première composition d'encre conductrice.

13. Carte de mémoire selon l'une quelconque des revendications 1 à 11, dans laquelle ladite première composition d'encre conductrice définit, sur la surface dudit substrat, une configuration ayant une zone centrale ouverte (22) et des parties formant bras opposés et espacés, ladite configuration constituant une partie de ladite voie conductrice en boucle fermée, et dans laquelle ladite seconde composition d'encre conductrice établit un contact conducteur avec ladite première composition magnétique conductrice et réunit lesdites parties formant bras de ladite configuration de manière à former la partie restante de ladite voie conductrice en boucle fermée, ladite seconde composition d'encre électriquement conductrice définissant un lien fusible, qui peut être rompu par un courant provenant d'un dispositif extérieur de lecture de manière à faire passer ainsi ledit site d'un premier état lisible dans un second état lisible.

14. Carte de mémoire selon la revendication 13, dans laquelle ladite configuration définit une zone centrale conductrice ouverte (22) en forme générale de trou de serrure.

15. Carte de mémoire selon la revendication 13, dans laquelle ladite seconde composition d'encre conductrice, qui définit ledit lien fusible, recouvre une partie de ladite première composition d'encre électriquement conductrice et franchit ladite zone non conductrice.

16. Carte de mémoire selon la revendication 15, dans laquelle ladite seconde composition d'encre conductrice, qui définit ledit lien fusible, se présente sous la forme d'une bande de ladite composition d'encre conductrice située au-dessus desdites parties formant bras de ladite configuration et en établissant un contact conducteur avec ces parties, et franchissant l'espace présent entre lesdites parties formant bras.

17. Carte de mémoire selon la revendication 13, dans laquelle ladite seconde composition électriquement conductrice comprend une composition thermoplastique thermorétractable et qui, dans le cas d'un chauffage à une température élevée, se ramollit et se rétracte de manière à interrompre ladite voie conductrice en boucle fermée.

18. Procédé pour fabriquer la carte de mémoire selon la revendication 1, comprenant les étapes suivantes consistant à :
appliquer par impression une première composition d'encre conductrice sur une zone prédéterminée d'un substrat et former une partie d'une voie conductrice en boucle fermée, et
appliquer par impression une seconde composition d'encre conductrice sur le substrat de manière qu'elle établisse un contact conducteur avec ladite première composition d'encre électriquement conductrice, et former un lien thermiquement fusible pour compléter ladite voie conductrice en boucle fermée et former de ce fait un site sur la carte, lisible par un dispositif extérieur de lecture, ladite seconde composition d'encre possédant une stabilité thermique inférieure à celle de ladite première composition d'encre, de sorte que le lien fusible interrompt ladite voie conductrice en boucle fermée, lorsqu'il est fondu.

19. Procédé pour fabriquer une carte de mémoire selon la revendication 18, selon lequel ladite étape d'application par impression d'une composition d'encre magnétique conductrice sur un substrat définit une configuration ayant une zone centrale ouverte et des parties formant bras opposés et espacés, ladite configuration formant une partie d'une voie conductrice en boucle fermée ; et ladite étape constituant à appliquer par impression une seconde composition d'encre électriquement conductrice de manière qu'elle établisse un contact conducteur avec ladite première composition d'encre électriquement conductrice, forme un lien fusible thermiquement fusible, qui réunit lesdites parties formant bras de ladite configuration de manière à compléter ladite voie conductrice en boucle fermée et former de ce fait un site sur la carte lisible par un dispositif extérieur de lecture, le lien fusible étant à même d'être fondu et rompu de manière à faire ainsi passer ledit site d'un premier état lisible dans un second état lisible ; et comportant en outre l'application, audit substrat, d'une couche protectrice recouvrant et protégeant les première et seconde compositions d'encres électriquement conductrices.
